# EUROPÄISCHE PATENTSCHRIFT

(11) **EP 2 946 109 B1**
(45) Veröffentlichungstag und Bekanntmachung des Hinweises auf die Patenterteilung: **22.02.2017**
(21) Anmeldenummer: 13811800.5
(22) Anmeldetag: 20.12.2013
(51) Int. Cl.: F03G 7/08

(54) **VORRICHTUNG ZUR SCHWINGUNGSDÄMPFUNG MIT ENERGIERÜCKGEWINNUNG UND FAHRZEUG MIT EINER SOLCHEN VORRICHTUNG**
DEVICE FOR DAMPING VIBRATIONS WITH AN ENERGY RECOVERY CAPABILITY, AND VEHICLE WITH SUCH A DEVICE
DISPOSITIF D'AMORTISSEMENT DES VIBRATIONS À RÉCUPÉRATION D'ÉNERGIE ET VÉHICULE MUNI D'UN TEL DISPOSITIF

(30) Priorität: 17.01.2013 DE 102013000798
(43) Veröffentlichungstag der Anmeldung: 25.11.2015
(73) Patentinhaber: Audi AG, 85045 Ingolstadt (DE); Karlsruher Institut für Technologie, 76131 Karlsruhe (DE)
(72) Erfinder: KOCH, Thilo, 85055 Ingolstadt (DE); UNGER, Andreas, 85080 Gaimersheim (DE); SCHEURICH, Bastian, 74206 Bad Wimpfen (DE); GAUTERIN, Frank, 76829 Leinsweiler (DE)
(74) Vertreter: Reichert, Thomas Klaus
(86) Internationale Anmeldenummer: PCT/EP2013/003879
(87) Internationale Veröffentlichungsnummer: WO 2014/111119

(56) Entgegenhaltungen:
- WO-A2-2009/092588
- DE-A1-102010 015 313

## Beschreibung

Die vorliegende Erfindung betrifft eine Vorrichtung zur Schwingungsdämpfung mit Energierückgewinnung umfassend eine Eingangswelle, die von einer relativ zu der Vorrichtung schwingenden Komponente in eine Rotation mit wechselnder Rotationsrichtung um deren Längsachse versetzt werden kann, wobei eine Freilaufvorrichtung antriebsseitig mit der Eingangswelle und abtriebsseitig zumindest mittelbar mit einem Generator, der die kinetische Rotationsenergie in elektrische Energie umwandeln und an ein Energiespeicherelement weiterleiten kann, in Verbindung steht, sowie ein Fahrzeug mit einer solchen Vorrichtung.

Derartige Vorrichtungen zur Schwingungsdämpfung werden beispielsweise im Fahrzeugbau parallel zu Federvorrichtungen verbaut, um das Aufschaukeln und Nachschwingen des Fahrzeugaufbaus bei entsprechender Anregung durch Unebenheiten der Straße oder durch gewisse Fahrzustände zu verhindern und um die von der Fahrbahn angeregte Schwingung eines Rades oder einer Achse rasch zum Abklingen zu bringen. Bisweilen im Handel verbreitete Vorrichtungen zur Schwingungsdämpfung (umgangssprachlich als "Stoßdämpfer" bezeichnet) zehren die Energie aus der Anregung auf und erwärmen sich dabei. Im Zuge der allgemeinen Verbesserung der Energieeffizienz sind in jüngster Zeit daher Vorrichtungen zur Schwingungsdämpfung mit Energierückgewinnung in den Fokus der Entwicklung gelangt.

Die gattungsbildende DE 10 2011 054 854 A1 offenbart eine Energierückgewinnungsvorrichtung für ein Aufhängungssystem eines Fahrzeugs, aufweisend einen Aufhängungsverbindungsarm, der einen Radträger mit einem Unterrahmen verbindet, um sich entsprechend einer Fahrbahnbedingung nach oben und nach unten zu bewegen, einen Drehrichtungswaridler, der zwischen einem Karosserieseiten-Anschlussabschnitt des Aufhängungsverbindungsglieds und einer Fahrzeugkarosserie angeordnet ist und von zwei Richtungsbewegungen des Karosserieseiten-Anschlussabschnitts gemäß der Auf- und Abwärtsbewegung des Aufhängungsverbindungsarms eine Einrichtungsbewegung ausgibt, einen Generator, der mittels einer Drehkraft gedreht wird, die von dem Drehrichtungswandler ausgegeben wird, um elektrische Energie zu erzeugen, einen Gleichrichter, der an den Generator angeschlossen ist, um die erzeugte elektrische Energie gleichzurichten, und eine Batterie, die mit dem Gleichrichter verbunden ist, um die elektrische Energie in diese zu laden. Der Drehrichtungswandler ist bevorzugt als Einwegkupplung ausgeführt, wobei die Einwegkupplung derart angeordnet ist, um den Generator, entweder wenn der Aufhängungsverbindungsarm nach unten oder wenn dieser nach oben bewegt wird, zu betätigen.

Nachteilig ist, dass die beschriebene Energierückgewinnungsvorrichtung durch die verwendete Einwegkupplung nur eine der beiden Bewegungsrichtungen des Aufhängungsverbindungsarms (entweder die Auf- oder die Ab-Bewegung) an den Generator weitergibt, während die andere Bewegungsrichtung frei durchdreht. Somit lässt sich nur ungefähr die Hälfte des vorhandenen kinetischen Potentials für die Energierückgewinnung nutzen.

Die Druckschrift DE 10 2010 015313 A1, die als nächstliegender Stand der Technik angesehen wird, zeigt die Merkmale des Oberbegriffs des Anspruchs 1.

Die Aufgabe der vorliegenden Erfindung ist es daher eine Vorrichtung zur Schwingungsdämpfung mit Energierückgewinnung und ein Fahrzeug mit einer derartigen Vorrichtung zur Schwingungsdämpfung bereitzustellen, die eine gegenüber dem Stand der Technik deutlich höhere Energierückgewinnungsrate aufweist.

Diese Aufgabe wird durch die Merkmale des Patentanspruchs 1 gelöst.

Ein Fahrzeug mit einer erfindungsgemäßen Vorrichtung zur Schwingungsdämpfung mit Energierückgewinnung ist in Patentanspruch 6 beansprucht.

Eine Vorrichtung zur Schwingungsdämpfung mit Energierückgewinnung umfasst eine Eingangswelle, die von einer relativ zu der Vorrichtung schwingenden Komponente in eine Rotation mit wechselnder Rotationsrichtung um deren Längsachse versetzt werden kann, wobei eine Freilaufvorrichtung antriebsseitig mit der Eingangswelle und abtriebsseitig zumindest mittelbar mit einem Generator, der die kinetische Rotationsenergie in elektrische Energie umwandeln und an ein Energiespeicherelement weiterleiten kann, in Verbindung steht, wobei die Freilaufvorrichtung einen ersten und einen zweiten Freilauf umfasst, die beide antriebsseitig drehfest mit der Eingangswelle verbunden und in entgegengesetzter Richtung sperrend angeordnet sind, wobei der zweite Freilauf abtriebsseitig mit einem Umkehrgetriebe in Verbindung steht, insbesondere mit diesem kämmt, und wobei das Umkehrgetriebe und der erste Freilauf abtriebsseitig zumindest mittelbar mit dem Generator antreibend in Verbindung stehen.

Indem zwei Freiläufe mit entgegengesetzter Sperrrichtung auf der Eingangswelle angeordnet werden, wird der Kraftfluss wechselweise entweder bei einer Linksdrehung oder einer Rechtsdrehung der Eingangswelle übertragen. Dadurch, dass einem der beiden Freiläufe (vorliegend als zweiter Freilauf bezeichnet) ein Umkehrgetriebe nachgeschaltet ist, entsteht am gemeinsamen Abtrieb von Umkehrgetriebe und dem anderen Freilauf (vorliegend als erster Freilauf bezeichnet) eine gleichgerichtete Drehbewegung bei Links- und Rechtsdrehung der Eingangswelle. Der gemeinsame Abtrieb der Freilaufvorrichtung steht zumindest mittelbar mit einer Rotorwelle des Generators in Verbindung, der eine Rekuperation der kinetischen Energie durchführt. Die Energieausbeute ist im Gegensatz zu dem eingangs genannten Stand der Technik dadurch deutlich erhöht, dass beide Drehrichtungen der Eingangswelle über die Freilaufvorrichtung an die Rotorwelle des Generators durchgestellt werden können. Der Generator dreht dadurch im Mittel mit einer höheren Winkelgeschwindigkeit. Zudem werden Massenträgheitseffekte, die bei einem Richtungswechsel der Rotorwelle des Generators entstehen würden, zeitlich entkoppelt.

Prinzipbedingt kann der Generator nur dann einen Kraftluss über die Freiläufe in Richtung Eingangswelle schicken, wenn die Winkelgeschwindigkeit des Generators geringer ist, als die der Eingangswelle. Ein schnell drehender Generator hätte damit zur Folge, dass die Eingangswelle, wenn Sie mit kleineren Winkelgeschwindigkeiten rotiert, keinen Durchtrieb zum Generator herstellen kann und dementsprechend frei dreht. In diesem Fall wäre eine sehr geringe Dämpfung durch die Vorrichtung dargestellt, was beispielsweise bei einem Fahrzeug einem Komfortmodus entspräche. Wäre jedoch ein Durchtrieb von Generator zur Eingangswelle gewünscht, so müsste der Generator unter die momentane Drehzahl der Eingangswelle abgebremst werden, was durch einen geeigneten Regelalgorithmus realisierbar ist. Hierzu empfiehlt sich unter anderem eine Sensorik, mit der die Drehzahl bzw. Winkelgeschwindigkeit der Eingangswelle überwacht und der Steuervorrichtung des Generators zu dessen Regelung zur Verfügung gestellt wird.

In einer bevorzugten Ausführung der Vorrichtung sind die Freiläufe und das Umkehrgetriebe in einer Hohlwelle angeordnet, die mit einer Rotorwelle des Generators zumindest mittelbar verbunden ist, wobei der erste Freilauf und das Umkehrgetriebe mit der Hohlwelle kämmen. Die Hohlwelle hat vorzugsweise eine Innenverzahnung, mit der die außenverzahnten Komponenten Umkehrgetriebe und erster Freilauf kämmen. Somit lässt sich durch Integration der Freiläufe und des Umkehrgetriebes in die Hohlwelle eine sehr kompakte Bauform realisieren. Die Hohlwelle ist bevorzugt in einem Gehäuse drehbar reibungsarm gelagert. Für eine weitere Integration könnte auch noch der Generator mit dessen Steuervorrichtung in das Gehäuse und eventuell auch in der Hohlwelle angeordnet werden.

In einer bevorzugten Ausführung der Vorrichtung ist der Grad der Energieumwandlung des Generators durch eine Steuervorrichtung kontinuierlich anpassbar. Die Dämpfungscharakteristik ließe sich dadurch über einen weiten Bereich stufenlos einstellen, was neue Möglichkeiten für eine adaptive Schwingungsdämpfung eröffnet.

In einer bevorzugten Ausführung der Vorrichtung ist das Energiespeicherelement als eine Batterie oder ein Kondensator ausgebildet. Die Batterie kann die aus dem Generator abfallende elektrische Energie als chemische Energie über einen vergleichsweise langen Zeitraum abspeichern und gegebenenfalls in ein daran angeschlossenes Netz einspeisen. Das gleiche Ziel lässt sich auch mit einem Kondensator, beispielsweise von der Art eines sog. "Supercaps" verfolgen, der die Energie jedoch nur vergleichsweise kurz Zwischenspeichern kann. Der Kondensator lässt sich aber durch sehr schnelle Lade- und Entladezyklen hervorragend als Pufferspeicher nutzen.

In einer bevorzugten Ausführung der Vorrichtung ist dem Generator ein Untersetzungsgetriebe vorgeschaltet, das die abtriebsseitige Winkelgeschwindigkeit der Freilaufvorrichtung für den Generator erhöht. Das Untersetzungsgetriebe ist zwischen Freilaufvorrichtung und Generator geschaltet, um die Winkelgeschwindigkeit der Rotorwelle zu erhöhen, damit der Generator mit einem höheren Wirkungsgrad betrieben werden kann.

Ein Fahrzeug hat mindestens eine erfindungsgemäße Vorrichtung zur Schwingungsdämpfung mit Energierückgewinnung, wobei vorzugsweise jedem Rad des Fahrzeugs eine derartige Vorrichtung zugeordnet ist. In einer bevorzugten Ausführung ist die Eingangswelle mittelbar oder unmittelbar mit einem Radführungselement verbunden. Das Radführungselement führt einerseits das Rad und ist andererseits an der Fahrzeugkarosserie oder dem Hilfsrahmen angelenkt. Die Auf- und Ab-Bewegung des Rades wird am karosserieseitigen Anlenkpunkt als Schwenkbewegung vorliegen, so dass es in einer bevorzugten Ausführung des Fahrzeugs vorteilhaft ist, wenn die Längsachse der Eingangswelle koaxial zu einer Schwenkachse des Radführungselements verläuft.

In einer bevorzugten Ausführung des Fahrzeugs ist das Radführungselement als ein Fahrwerkslenker, insbesondere als ein Querlenker, ausgebildet.

In einer bevorzugten Ausführung des Fahrzeugs ist die Freilaufvorrichtung an einer Fahrzeugkarosserie oder einem Hilfsrahmen angeordnet. Die Freilaufvorrichtung ist somit fest an der gefederten Masse des Fahrzeugs befestigt und erfährt über die wechselsinnig rotierende Eingangswelle die Schwingungen der ungefederten Masse, beispielsweise beim Überfahren von Unebenheiten.

In einer bevorzugten Ausführung des Fahrzeugs ist der Grad der Energieumwandlung des Generators durch eine Steuervorrichtung kontinuierlich anpassbar, wobei die Steuervorrichtung von einer Fahrstabilitätsregeleinrichtung beeinflussbar ist. Die kontinuierliche Anpassung der Rekuperationsleistung des Generators erlaubt eine sehr flexible Anpassung der Dämpfung. Werden in diese Regelung die Daten einer Fahrstabilitätseinrichtung, beispielsweise eines elektronischen Stabilitätsprogramms (ESP), eingespeist, so kann durch eine entsprechende fortlaufende Anpassung der Dämpfungscharakteristik das Fahrverhalten des Fahrzeugs positiv beeinflusst werden.

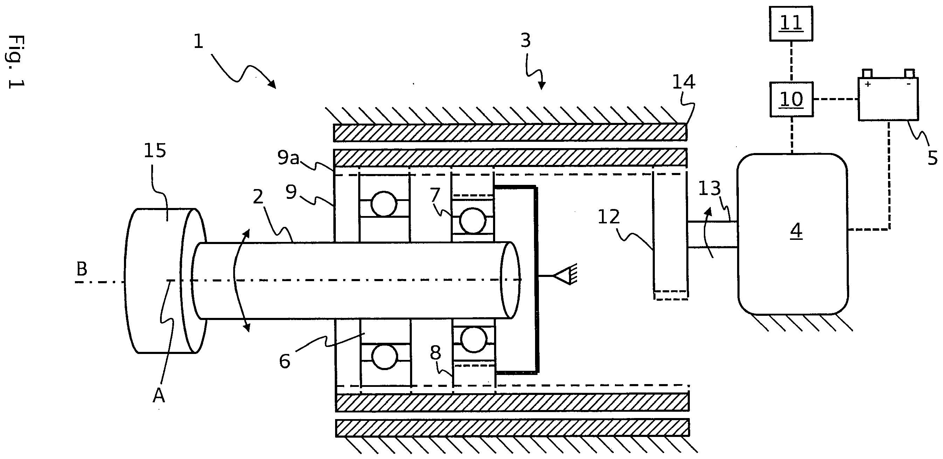

Weitere Einzelheiten und Vorteile der Erfindung ergeben sich aus der nachstehenden Beschreibung eines bevorzugten Ausführungsbeispiels unter Bezugnahme auf die Zeichnung.

Darin zeigt die einzige Figur eine schematische Ansicht der Vorrichtung zur Schwingungsdämpfung.

Gemäß der Figur hat eine Vorrichtung 1 zur Schwingungsdämpfung mit Energierückgewinnung eine Eingangswelle 2, deren Längsachse A koaxial zu einer Schwenkachse B eines Radführungselements 15 eines nicht dargestellten Fahrzeugs angeordnet und drehfest mit diesem verbunden ist. Die Eingangswelle 2 führt beim Betrieb des Fahrzeugs unregelmäßige Drehbewegungen um die Rotationsachse A mit wechselnder Drehrichtung aus. An die Eingangswelle 2 ist eine Freilaufvorrichtung 3 angekoppelt. Die Freilaufvorrichtung 3 umfasst unter anderem einen ersten Freilauf 6 und einen zweiten Freilauf 7, die beide hintereinander auf der Eingangswelle 2 mit entgegengesetzter Sperrrichtung angeordnet und drehfest mit dieser verbunden sind. Vorliegend kämmt der erste Freilauf 6 abtriebsseitig mit einer Innenverzahnung 9a einer unter anderem die Freiläufe 6 und 7 umgebenden Hohlwelle 9. Die Hohlwelle 9 ist in einem karosseriefesten Gehäuse 14 drehbar gelagert. Der zweite Freilauf 7 kämmt abtriebsseitig mit einem Umkehrgetriebe 8, das wiederum mit der Innenverzahnung 9a der Hohlwelle 9 kämmt. Die Hohlwelle 9 steht indes abtriebsseitig mit einem Untersetzungsgetriebe 12 in Wirkverbindung, wobei das Untersetzungsgetriebe 12 die Winkelgeschwindigkeit der Hohlwelle 9 für eine an den Abtrieb des Untersetzungsgetriebes 12 angeschlossene Rotorwelle 13 eines elektrischen Generators 4 erhöht. Der Generator 4 wandelt die kinetische Energie aus der Rotation der Rotorwelle 13 in elektrische Energie um, die er an das Energiespeicherelement 5 sendet. Eine Steuervorrichtung 10 überwacht und steuert den Betrieb des Generators 4 und des Energiespeicherelements 5, insbesondere ist die Rekuperationsleistung des Generators 4 und die Energieaufnahmefähigkeit des Energiespeicherelements 5 zu überwachen. Die Rekuperationsleistung bestimmt auch den Dämpfungsgrad der Vorrichtung 1, weshalb die Steuervorrichtung 10 zusätzlich mit einer Fahrstabilitätsregeleinrichtung 11 in Datenaustausch zur Auswahl einer geeigneten Regelstrategie steht.

### Liste der Bezugszeichen:

- A: Längsachse
- B: Schwenkachse

- 1: Vorrichtung zur Schwingungsdämpfung
- 2: Eingangswelle
- 3: Freilaufvorrichtung
- 4: Generator
- 5: Energiespeicherelement
- 6: erster Freilauf
- 7: zweiter Freilauf
- 8: Umkehrgetriebe
- 9: Hohlwelle
- 9a: Innenverzahnung
- 10: Steuervorrichtung
- 11: Fahrstabilitätsregeleinrichtung
- 12: Untersetzungsgetriebe
- 13: Rotorwelle
- 14: Gehäuse
- 15: Radführungselement

## Patentansprüche

1. Vorrichtung (1) zur Schwingungsdämpfung mit Energierückgewinnung umfassend eine Eingangswelle (2), die von einer relativ zu der Vorrichtung (1) schwingenden Komponente in eine Rotation mit wechselnder Rotationsrichtung um deren Längsachse (A) versetzt werden kann, wobei eine Freilaufvorrichtung (3) antriebsseitig mit der Eingangswelle (2) und abtriebsseitig zumindest mittelbar mit einem Generator (4), der die kinetische Rotationsenergie in elektrische Energie umwandeln und an ein Energiespeicherelement (5) weiterleiten kann, in Verbindung steht, **dadurch gekennzeichnet, dass** die Freilaufvorrichtung (3) einen ersten (6) und einen zweiten Freilauf (7) umfasst, die beide antriebsseitig drehfest mit der Eingangswelle (2) verbunden und in entgegengesetzter Richtung sperrend angeordnet sind, wobei der zweite Freilauf (7) abtriebsseitig mit einem Umkehrgetriebe (8) in Verbindung steht und wobei das Umkehrgetriebe (8) und der erste Freilauf (6) abtriebsseitig zumindest mittelbar mit dem Generator (4) in Verbindung stehen.

2. Vorrichtung (1) nach Anspruch 1, **dadurch gekennzeichnet, dass** die Freiläufe (6, 7) und das Umkehrgetriebe (8) in einer Hohlwelle (9) angeordnet sind, die mit einer Rotorwelle (13) des Generators (4) zumindest mittelbar verbunden ist, wobei der erste Freilauf (7) und das Umkehrgetriebe (8) mit der Hohlwelle (9) kämmen.

3. Vorrichtung (1) nach Anspruch 1 oder 2, **dadurch gekennzeichnet, dass** der Grad der Energieumwandlung des Generators (4) durch eine Steuervorrichtung (10) kontinuierlich anpassbar ist.

4. Vorrichtung (1) nach einem der Ansprüche 1 bis 3, **dadurch gekennzeichnet, dass** das Energiespeicherelement (5) als eine Batterie oder ein Kondensator ausgebildet ist.

5. Vorrichtung (1) nach einem der Ansprüche 1 bis 4, **dadurch gekennzeichnet, dass** dem Generator (4) ein Untersetzungsgetriebe (12) vorgeschaltet ist, das die abtriebsseitige Winkelgeschwindigkeit der Freilaufvorrichtung (3) für den Generator (4) erhöht.

6. Fahrzeug mit mindestens einer Vorrichtung (1) zur Schwingungsdämpfung mit Energierückgewinnung nach Anspruch 1.

7. Fahrzeug nach Anspruch 6, **dadurch gekennzeichnet, dass** die Eingangswelle (2) mittelbar oder unmittelbar mit einem Radführungselement (15) verbunden ist.

8. Fahrzeug nach Anspruch 7, **dadurch gekennzeichnet, dass** die Längsachse (A) der Eingangswelle (2) koaxial zu einer Schwenkachse (B) des Radführungselements (15) angeordnet ist.

9. Fahrzeug nach Anspruch 7 oder 8, **dadurch gekennzeichnet, dass** das Radführungselement (15) als ein Fahrwerkslenker ausgebildet ist.

10. Fahrzeug nach einem der Ansprüche 6 bis 9, **dadurch gekennzeichnet, dass** die Freilaufvorrichtung (3) an einer Fahrzeugkarosserie oder einem Hilfsrahmen angeordnet ist.

11. Fahrzeug nach einem der Ansprüche 6 bis 10, **dadurch gekennzeichnet, dass** der Grad der Energieumwandlung des Generators (4) durch eine Steuervorrichtung (10) kontinuierlich anpassbar ist, wobei die Steuervorrichtung (10) von einer Fahrstabilitätsregeleinrichtung (11) beeinflussbar ist.

## Claims

1. Device (1) for damping vibrations with energy recovery, comprising an input shaft (2) having a longitudinal axis (A) and being rotatable about the longitudinal axis in alternating rotational directions by a component that vibrates relative to the device (1), wherein a freewheel device (3) is connected on the input side to the input shaft (2) and is at least indirectly connected on the output side to a generator (4) which is capable of converting the kinetic rotational energy into electric energy and transferring said electric energy to an energy storage element (5), **characterized in that** the freewheel device (3) comprises a first (6) and a second freewheel (7) which are each rotationally fixed to the input shaft (2) on the input side and configured to lock in opposite directions of rotation of the input shaft, wherein the second freewheel (7) is connected on the output side to a reversing gear mechanism (8), and wherein the reversing gear mechanism (8) and the first freewheel (6) are at least indirectly connected on the output side to the generator (4).

2. Device (1) according to claim 1, **characterized in that** the freewheels (6, 7) and the reversing gear mechanism (8) are arranged within a hollow shaft (9) which is at least indirectly connected to a rotor shaft (13) of the generator (4), wherein the first freewheel (7) and the reversing gear mechanism (8) mesh with the hollow shaft (9).

3. Device (1) according to claim 1 or 2, **characterized in that** the degree of energy conversion of the generator (4) can be adjusted continuously by a control device (10).

4. Device (1) according to any of claims 1 to 3, **characterized in that** the energy storage element (5) is configured as a battery or a capacitor.

5. Device (1) according to any of claims 1 to 4, **characterized in that** a reduction gear (12) is arranged upstream of the generator (4), which reduction gear increases the angular speed of the freewheel device (3) for the generator (4) on the output side.

6. Vehicle with at least one device (1) for damping vibrations with energy recovery according to claim 1.

7. Vehicle according to claim 6, **characterized in that** the input shaft (2) is connected directly or indirectly to a wheel guide element (15).

8. Vehicle according to claim 7, **characterized in that** the longitudinal axis (A) of the input shaft (2) is arranged coaxially to a pivot axis (B) of the wheel guide element (15).

9. Vehicle according to claim 7 or 8, **characterized in that** the wheel guide element (15) is constructed as a control arm.

10. Vehicle according to any of claims 6 to 9, **characterized in that** the freewheel device (3) is arranged on a body of the vehicle or an auxiliary frame.

11. Vehicle according to any of claims 6 to 10, **characterized in that** the degree of energy conversion of the generator (4) can be adjusted continuously by a control device (10), wherein the control device (10) is controllable by a driving stability control device (11).

## Revendications

1. Dispositif (1) pour l'amortissement d'oscillations avec récupération d'énergie, comprenant un arbre d'entrée (2) qui peut être amené en rotation autour de son axe longitudinal (A) avec un sens de rotation alterné par un composant oscillant par rapport au dispositif (1), un dispositif à roue libre (3) étant en liaison côté entraînement avec l'arbre d'entrée (2) et côté sortie au moins indirectement avec un générateur (4), qui peut transformer l'énergie de rotation cinétique en énergie électrique et la transférer à un élément de stockage d'énergie (5), **caractérisé en ce que** le dispositif à roue libre (3) comprend une première roue libre (6) et une deuxième roue libre (7), qui sont reliées côté entraînement à l'arbre d'entrée (2) de manière solidaire en rotation et qui sont disposées de manière à bloquer dans une direction opposée, la deuxième roue libre (7) étant en liaison côté sortie avec un mécanisme de renversement (8) et le mécanisme de renversement (8) et la première roue libre (6) étant en liaison côté sortie au moins indirectement avec le générateur (4).

2. Dispositif (1) selon la revendication 1, **caractérisé en ce que** les roues libres (6, 7) et le mécanisme de renversement (8) sont disposés dans un arbre creux (9), qui est relié au moins indirectement à un arbre de rotor (13) du générateur (4), la première roue libre (7) et le mécanisme de renversement (8) s'engrenant avec l'arbre creux (9).

3. Dispositif (1) selon la revendication 1 ou 2, **caractérisé en ce que** le taux de la conversion d'énergie du générateur (4) peut être adapté en continu par un dispositif de commande (10).

4. Dispositif (1) selon l'une quelconque des revendications 1 à 3, **caractérisé en ce que** l'élément de stockage d'énergie (5) est réalisé comme une batterie ou un condensateur.

5. Dispositif (1) selon l'une quelconque des revendications 1 à 4, **caractérisé en ce qu'**un démultiplicateur (12) est placé en amont du générateur (4), lequel démultiplicateur augmente la vitesse angulaire côté sortie du dispositif à roue libre (3) pour le générateur (4).

6. Véhicule avec au moins un dispositif (1) pour l'amortissement d'oscillations avec récupération d'énergie selon la revendication 1.

7. Véhicule selon la revendication 6, **caractérisé en ce que** l'arbre d'entrée (2) est relié directement ou indirectement à un élément de guidage de roue (15).

8. Véhicule selon la revendication 7, **caractérisé en ce que** l'axe longitudinal (A) de l'arbre d'entrée (2) est disposé de manière coaxiale par rapport à un axe de pivotement (B) de l'élément de guidage de roue (15).

9. Véhicule selon la revendication 7 ou 8, **caractérisé en ce que** l'élément de guidage de roue (15) est réalisé comme un bras oscillant transversal de châssis.

10. Véhicule selon l'une quelconque des revendications 6 à 9, **caractérisé en ce que** le dispositif à roue libre (3) est disposé au niveau d'une carrosserie de véhicule ou au niveau d'un faux-châssis.

11. Véhicule selon l'une quelconque des revendications 6 à 10, **caractérisé en ce que** le taux de la conversion d'énergie du générateur (4) peut être adapté en continu par un dispositif de commande (10), le dispositif de commande (10) pouvant être influencé par un système de réglage de stabilité de conduite (11).
